# FASCICULE DE BREVET EUROPEEN

(11) **EP 2 877 389 B1**
(45) Date de publication et mention de la délivrance du brevet: **30.08.2017**
(21) Numéro de dépôt: 13756554.5
(22) Date de dépôt: 09.07.2013
(51) Int. Cl.: B62D 25/20, B60P 3/42, B60N 2/015

(54) **ELEMENT DE PLATEFORME D'UN CHASSIS DE VEHICULE AUTOMOBILE, CHASSIS ET VEHICULE AUTOMOBILE EQUIPE**
ELEMENT EINER FAHRGESTELLPLATTFORM EINES KRAFTFAHRZEUGES , FAHRGESTELL UND DAMIT AUSGESTATTETES KRAFTFAHRZEUG
MOTOR VEHICLE CHASSIS PLATFORM ELEMENT, CHASSIS AND MOTOR VEHICLE SO EQUIPPED

(30) Priorité: 27.07.2012 FR 1257313
(43) Date de publication de la demande: 03.06.2015
(73) Titulaire: Renault S.A.S., 92100 Boulogne-Billancourt (FR)
(72) Inventeur: PATRELLE, Olivier, F-78280 Guyancourt (FR); OUMESSAOUD, Nordine, F-78210 Saint Cyr (FR); VALLET, Maxime, F-91470 Limours (FR)
(86) Numéro de dépôt international: PCT/FR2013/051637
(87) Numéro de publication internationale: WO 2014/016490

(56) Documents cités:
- EP-A2- 0 983 930
- WO-A2-2008/151087
- FR-A1- 2 813 249
- US-A- 5 443 239

## Description

La présente invention concerne un élément de plateforme d'un châssis de véhicule automobile, un châssis ainsi qu'un véhicule automobile.

En particulier, elle concerne un élément de plateforme de châssis, ou plancher de véhicule, destiné à aménager la partie avant du châssis supportant un siège avant, notamment le siège avant passager.

Les éléments de plateforme de châssis comprennent des éléments réalisés le plus souvent en pièces issues de procédé d'emboutissage pour se fixer par vissage ou soudure sur un châssis de véhicule. Ils sont destinés ensuite à recueillir les divers équipements d'habillage intérieur du véhicule tels les sièges, les tapis...Un tel élément de plateforme est par exemple décrit dans FR2917058 qui concerne un aménagement destiné au siège arrière. Cet aménagement n'est pas transposable pour un siège avant pour lequel les fonctionnalités demandées et les normes de sécurité s'appliquant sont de nature différente.

En outre, dans un but économique, il convient de standardiser le plus possible les planchers de véhicule au sein d'une même gamme. Un plancher peut ainsi être conçu pour une utilisation pour un véhicule familial, avec des interfaces prévues pour placer les sièges et des espaces creux aménagés pour les caves à pieds des occupants, notamment à l'avant du véhicule. On peut souhaiter aussi que ce même plancher soit employé pour un véhicule utilitaire, qui a des conditions d'utilisation différentes en prévoyant une possibilité d'aménagement en plancher plat depuis l'arrière du véhicule jusqu'à la place avant passager comprise, de façon à pouvoir charger des objets longs dans le véhicule en permettant plusieurs possibilités de longueur envisageables pour le chargement.

Il convient donc de prévoir les éléments nécessaires à l'adaptation du plancher du siège avant passager, utilisé pour un véhicule familial, afin de permettre plusieurs longueurs possibles pour une charge transportée lorsque le véhicule est utilisé en version utilitaire, tout en permettant une utilisation du siège avant passager du véhicule utilitaire.

Ce but est atteint grâce à l'invention qui propose un élément de plateforme d'un châssis de véhicule automobile comprenant des dispositifs de réception de fixations d'un siège automobile fixés sur une surface supérieure de l'élément, ledit élément étant destiné à être fixé en partie avant d'un châssis de véhicule pour la réception d'un siège avant muni d'une assise et d'un dossier, et en ce que les dispositifs de réception de fixation de siège sont adaptés pour permettre une extraction du siège, une fixation complète du siège en position d'utilisation et une fixation partielle du siège autorisant le pivotement du siège vers l'avant lorsque le dossier du siège est rabattu contre l'assise du siège. L'élément de plateforme comprend un dispositif d'accueil d'une tige support d'une cloison intérieure rabattable permettant la réception de ladite tige support de cloison, le dispositif d'accueil étant placé sur la surface supérieure de l'élément de plateforme. En effet, une cloison grillagée est souvent ajoutée dans ce type de véhicule afin d'isoler la partie chargement de la partie conduite. La fixation de la cloison sur l'élément de plateforme permet avantageusement d'adapter les dimensions de l'espace de chargement suivant l'occupation du siège passager. Avantageusement, l'élément de plateforme comporte les dispositifs de réception de fixation de siège permettant au siège de présenter trois états de positionnement différents, chacun des états étant adapté à une longueur charge transportée.

Ainsi, la fixation complète du siège sur la plateforme permet une utilisation du siège classique par un occupant et une utilisation de l'espace de chargement alors limité à la partie arrière du véhicule. Un passage du siège en position de rabattement permet d'agrandir les possibilités de chargement en longueur en bénéficiant de la longueur supplémentaire du siège avant jusqu'aux fixations avant et enfin, l'extraction totale du siège du véhicule permet d'avoir une longueur d'espace de chargement maximale, qui est la longueur depuis l'arrière du véhicule jusqu'à la planche de bord.

Dans des formes de réalisation préférées de l'invention, on a en outre recours à l'une et/ou à l'autre des dispositions suivantes prises seules ou en combinaison :
- Les dispositifs de réception de fixation de siège comprennent au moins une tige fixée sur une partie avant de l'élément de plateforme et destinée à permettre le pivotement du siège autour de celle-ci.
- le dispositif d'accueil de la tige support est disposé sensiblement en périphérie de la surface supérieure.
- L'élément de plateforme présente une surface supérieure sensiblement horizontale et rectangulaire, ainsi que au moins deux cotés latéraux parallèles, sensiblement verticaux et perpendiculaires à la surface supérieure, les cotés latéraux reposant perpendiculairement sur deux traverses d'extrémités inférieures, lesdites traverses étant destinées à être fixées sur le châssis du véhicule.
- L'élément de plateforme comprend une ouverture réalisée sur la surface supérieure, l'ouverture étant destinée à permettre l'accès à un espace de rangement délimité en partie supérieure par l'élément de plateforme.
- La partie supérieure de l'élément de plateforme est une pièce obtenue à partir d'un flanc de tôle emboutie.

L'invention concerne aussi un châssis de véhicule comprenant une plateforme arrière de chargement et un élément de plateforme selon les caractéristiques précédentes, ledit élément de plateforme assurant une partie de surface continue en hauteur, adaptée pour le chargement d'objets depuis la plateforme arrière jusqu'à l'avant de l'élément de plateforme avant. On a recours aussi aux dispositions suivantes pour le châssis prises seules ou en combinaison :
- Le châssis de véhicule comprend un élément de plateforme présentant une surface de fixation en contact avec la plateforme arrière
- Le châssis de véhicule comprend un espace de rangement refermé par un élément de plateforme selon les caractéristiques précédentes

Enfin, l'invention concerne un véhicule automobile comprenant un châssis selon les caractéristiques précédentes et/ou un élément de plateforme selon les caractéristiques précédentes.

D'autres caractéristiques et avantages de l'invention apparaîtront au cours de la description suivante de plusieurs de ses formes de réalisation, données à titre d'exemples non limitatifs, en regard des dessins joints. Sur les dessins :
La figure 1 est une vue partielle en perspective d'une partie avant de châssis de véhicule automobile avec un siège passager en position d'utilisation.
La figure 2 est une vue avant partielle en perspective d'un soubassement de siège avant passager.
La figure 3 est une vue partielle en perspective d'une partie avant de châssis de véhicule automobile avec un siège passager extrait, montrant la partie supérieure de l'élément de plateforme.
La figure 4 est une vue partielle en perspective d'une partie avant de châssis de véhicule automobile avec un siège passager en position de rabattement et une tige de cloison placée en position rabattue.

Dans le contexte de la présente demande, les termes « avant », « arrière » s'entendent en référence à un repère usuel des véhicules automobiles comprenant un premier axe longitudinal X, horizontal et orienté de l'arrière vers l'avant du véhicule, un axe transversal Y et un axe vertical Z dirigé du bas vers le haut.

Par ailleurs, sur les différentes figures, les mêmes références désignent des éléments identiques ou similaires.

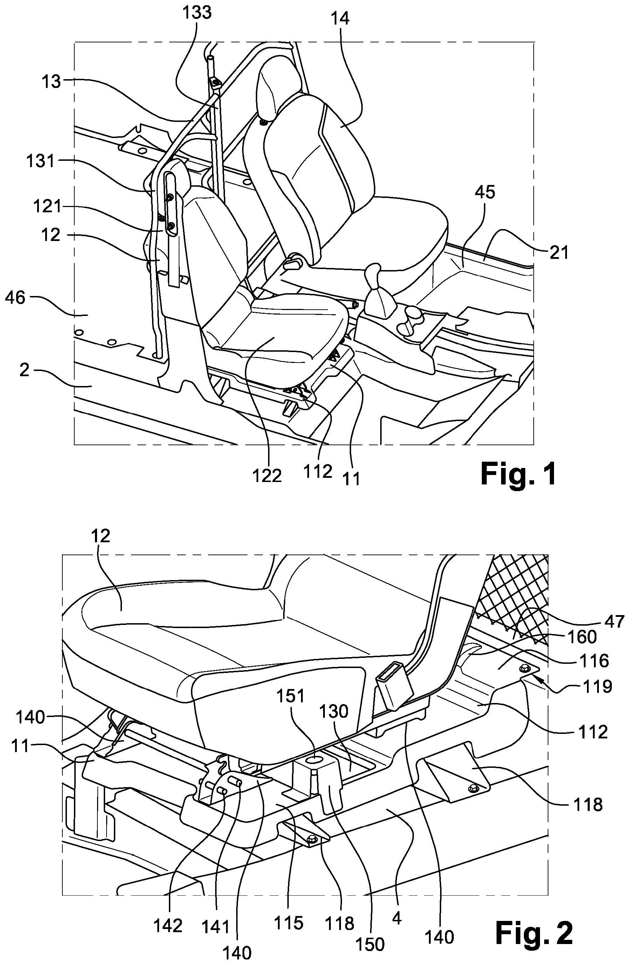

Sur la figure 1 sont représentés un siège passager et un siège conducteur en position d'utilisation.

Par position d'utilisation, on entend que les sièges peuvent recevoir un occupant dans la position habituelle d'occupation du véhicule. Le véhicule représenté est un véhicule utilitaire, la partie occupant est séparée d'une partie chargement par une cloison intérieure rabattable grillagée 13. Sur les figures, le grillage n'est pas représenté, seules les tiges support de la cloison sont apparentes. La cloison est positionnée derrière les sièges avants, elle est disposée sensiblement dans un plan transversal. Elle comprend une partie fixe placée derrière le conducteur et une partie mobile pouvant pivoter derrière le passager. L'axe de pivotement 133 est situé sensiblement au centre du véhicule. La tige support se déplaçant est située sensiblement sur le coté latéral du véhicule, à proximité de la porte.

Le siège passager est placé sur un élément de plateforme 11 en tôle peinte disposé sur le plancher du véhicule qui a été au préalable recouvert d'un tapis d'habillage 45 en partie avant.

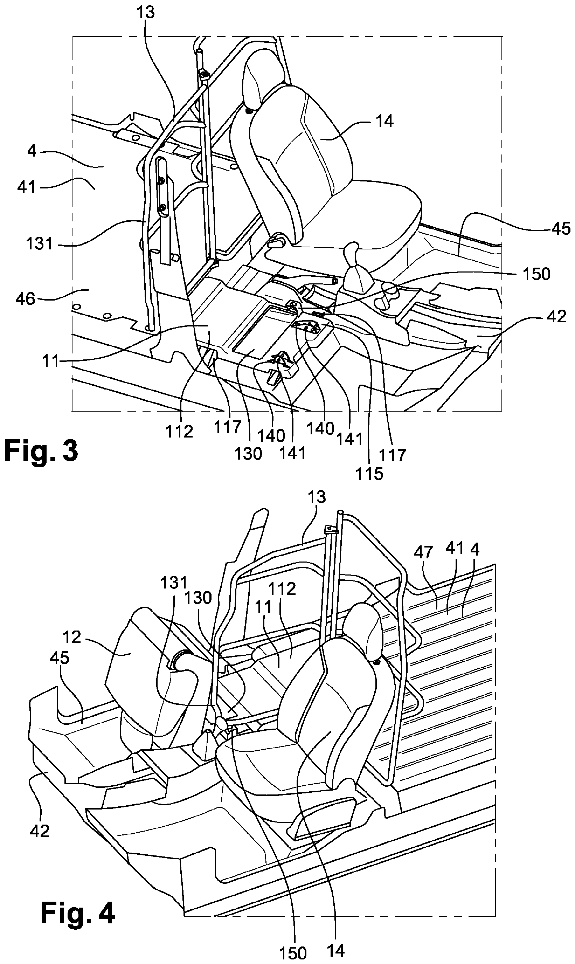

La figure 2 montre plus en détail une vue en perspective d'un soubassement de siège avant passager disposé sur un élément de plateforme 11 d'un châssis 4 de véhicule automobile. L'élément de plateforme comprend des dispositifs de réception 140 de fixations d'un siège automobile agencées en partie supérieure de l'élément de plateforme. L'élément de plateforme 11 est fixé en partie avant 41 d'un châssis 4 de véhicule de façon à être destiné à la réception d'un siège avant 12. Les dispositifs de réception 140 de fixation de siège sont adaptés pour permettre une fixation complète du siège en position d'utilisation tel représenté sur les figures 1 et 2, c'est-à-dire par une fixation en au moins 4 points de fixation des glissières du siège sur l'élément de plateforme: deux fixations à l'avant et au moins deux fixations à l'arrière. Ils permettent aussi une extraction du siège représentée en figure 3 et une fixation partielle du siège à l'avant autorisant le pivotement du siège vers l'avant lorsque le dossier 121 du siège est rabattu contre l'assise 122 du siège, tel que représentée en figure 4.

Tels que représentés sur la figure 2, les dispositifs de réception 140 de fixation de siège comprennent à l'avant une paire d'étriers fixés sur la surface supérieure de plateforme portant au moins une tige transversale 141 fixée sur la partie avant 115 de l'élément de plateforme 11 de chaque coté de la fixation de siège. Les tiges 141 permettent le pivotement du siège 12 autour de celles-ci. Une tige additionnelle 142 est prévue sur l'étrier intérieur permettant le verrouillage du siège en position de rabattement.

L'élément de plateforme comprend aussi un dispositif d'accueil 150 de la tige support 131 d'une cloison intérieure rabattable 13 permettant la réception de la tige support de cloison 131, le dispositif d'accueil 150 étant placé sur la surface supérieure 112 de l'élément de plateforme 11. Ce dispositif d'accueil 150 est disposé sensiblement en périphérie de la surface supérieure 112. Il consiste en un organe de réception de tige, possédant un évidement circulaire 151 en son centre permettant la réception de la tige support de cloison 131.

Un système de verrouillage peut être intégré à l'intérieur du dispositif d'accueil permettant le verrouillage de la tige en position de rabattement.

L'élément de plateforme d'un châssis présente une surface supérieure 112 sensiblement horizontale et rectangulaire, ainsi que au moins deux cotés latéraux 117 parallèles, sensiblement verticaux et perpendiculaires à la surface supérieure, les cotés latéraux 117 reposant perpendiculairement sur deux traverses 118 en forme de U. L'élément de plateforme est fixé sur le châssis 4 du véhicule au moyen de vis placées sur les traverses et sur l'extrémité arrière 116 de l'élément de plateforme. L'extrémité arrière 116 de l'élément de plateforme constitue une bande transversale horizontale légèrement surélevée en hauteur par rapport à la partie avant supérieure de la plateforme et possède des nervures 160 assurant la continuité des nervures 47 présentes sur la plateforme arrière de chargement 41. La partie arrière de l'élément de plateforme 116 présente une surface de fixation 119, vissée, en contact avec la plateforme arrière 41 du châssis 4.

Comme on le voit sur la figure 3 représentant une partie avant de châssis où le siège avant passager est extrait, l'élément de plateforme 11 d'un châssis de véhicule automobile comprend une ouverture 130 réalisée en partie supérieure, l'ouverture est rectangulaire et est destinée à permettre l'accès à un espace de rangement 111 délimité en partie supérieure par l'élément de plateforme 112. Lorsque la cloison est en position suivant la direction transversale, c'est-à-dire non rabattue vers le conducteur, et que le siège est en position extrait ou rabattu, l'accès au rangement est réalisable depuis la place conducteur.

Le siège en position d'utilisation recouvre l'ouverture de l'espace de rangement. L'accès à l'espace de rangement ne se réalise que par repliement du siège en position de rabattement ou éventuellement extraction complète du siège comme représenté en figure 3.

L'élément de plateforme 11 est fixé sur le châssis 4 après que celui-ci ait été recouvert d'un élément d'habillage 45. Le tapis a été représenté en figure 1, 3 et 4 mais n'a pas été représenté en figure 2 pour une lisibilité de figure.

La figure 4 représente une vue avant en perspective de l'avant du châssis 4 comprenant les sièges avants conducteur et passager 12 et 14 avec le siège passager 12 en position de rabattement. La cloison métallique mobile 13 est rabattue en direction du conducteur permettant d'isoler celui-ci de la cargaison. La tige support de cloison rabattable est placée à l'intérieur du dispositif d'accueil 150 de tige de cloison 131. La position de rabattement de la cloison et du siège passager permet un chargement long du véhicule à l'arrière, depuis l'arrière du véhicule jusqu'aux dispositifs de réception des fixations 140 du siège avant passager, placés à l'avant. L'ensemble présentant ainsi une surface continue jusqu'à l'arrière de l'assise du siège en position de rabattement, de hauteur sensiblement continue, adaptée pour le chargement et le stockage d'objets.

La partie supérieure 112 de l'élément de plateforme est une pièce obtenue à partir d'un flanc de tôle embouti sur lequel se fixe, par soudage, en partie inférieure, les traverses inférieures 118 et en partie supérieure les dispositifs de réception des fixations de siège 140 et le dispositif de réception de tige de cloison 150. L'ensemble est peint et fixé sur le véhicule après le positionnement du tapis d'habillage 45 sur le châssis 4.

L'élément de plateforme 11 est un moyen simple et économique de permettre une adaptation de siège passager à une utilisation du véhicule en utilitaire pouvant effectuer des chargements de grande longueur.

## Revendications

1. Elément de plateforme (11) d'un châssis de véhicule automobile comprenant des dispositifs de réception (140) de fixations d'un siège automobile, ledit élément étant destiné à être fixé en partie avant (41) d'un châssis (4) de véhicule pour la réception d'un siège avant (12) muni d'une assise (122) et d'un dossier (121), l'élément comprenant une surface supérieure (112) sur laquelle sont fixés les dispositifs de réception (140) de fixations de siège, **caractérisé en ce que** les dispositifs de réception (140) de fixation de siège sont adaptés pour permettre une extraction du siège, une fixation complète du siège en position d'utilisation et une fixation partielle du siège autorisant le pivotement du siège vers l'avant lorsque le dossier (121) du siège est rabattu contre l'assise (122) du siège et **en ce qu'**il comprend un dispositif d'accueil (150) d'une tige support (131) d'une cloison intérieure rabattable (13) permettant la réception de ladite tige support de cloison (131), le dispositif d'accueil (150) étant placé sur la surface supérieure (112) de l'élément de plateforme (11).

2. Elément de plateforme (11) d'un châssis de véhicule automobile selon la revendication 1 **caractérisé en ce que** les dispositifs de réception (140) de fixation de siège comprennent au moins une tige (141) fixée sur une partie avant (115) de l'élément de plateforme (11) et destinée à permettre le pivotement du siège (12) autour de celle-ci.

3. Elément de plateforme (11) d'un châssis de véhicule automobile selon les revendications 1 ou 2 **caractérisé en ce que** le dispositif d'accueil (150) est disposé sensiblement en périphérie de la surface supérieure (112).

4. Elément de plateforme (11) d'un châssis de véhicule automobile selon l'une quelconque des revendications précédentes **caractérisé en ce qu'**il présente une surface supérieure (112) sensiblement horizontale et rectangulaire, ainsi que au moins deux cotés latéraux (117) parallèles, sensiblement verticaux et perpendiculaires à la surface supérieure, les cotés latéraux (117) reposant perpendiculairement sur deux traverses (118) d'extrémités inférieures, lesdites traverses étant destinées à être fixées sur le châssis (4) du véhicule.

5. Elément de plateforme (11) d'un châssis de véhicule automobile selon l'une quelconque des revendications précédentes **caractérisé en ce qu'**elle comprend une ouverture (130) réalisée sur la surface supérieure (112), l'ouverture étant destinée à permettre l'accès à un espace de rangement (111) délimité en partie supérieure par l'élément de plateforme (11).

6. Elément de plateforme (11) d'un châssis de véhicule automobile selon l'une quelconque des revendications précédentes **caractérisé en ce que** la partie supérieure (112) est une pièce obtenue à partir d'un flanc de tôle emboutie.

7. Châssis de véhicule (4) comprenant une plateforme arrière (21) de chargement et un élément de plateforme (11) selon l'une quelconque des revendications précédentes disposé à l'avant du châssis, ledit élément de plateforme (11) assurant une partie de surface continue, de hauteur continue, adaptée pour le stockage d'objets depuis la plateforme arrière (41) jusqu'à l'avant (115) de l'élément de plateforme (11) disposé à l'avant.

8. Châssis de véhicule (4) comprenant une plateforme arrière de chargement et un élément de plateforme selon l'une quelconque des revendications 1 à 6, ladit élément de plateforme présentant une surface de fixation (119) en contact avec la plateforme arrière

9. Châssis de véhicule (4) comprenant un espace de rangement refermé par un élément de plateforme (11) selon l'une quelconque des revendications 1 à 6.

10. Véhicule comprenant un élément de plateforme (11) selon les revendications 1 à 6 et/ou un châssis (4) selon les revendications 7 à 9.

## Patentansprüche

1. Plattformelement (11) eines Kraftfahrzeug-Fahrgestells, das Aufnahmevorrichtungen (140) für Befestigungen eines Fahrzeugsitzes enthält, wobei das Element dazu bestimmt ist, im vorderen Bereich (41) eines Fahrgestells (4) eines Fahrzeugs zur Aufnahme eines Vordersitzes (12) befestigt zu werden, der mit einer Sitzfläche (122) und mit einer Rückenlehne (121) versehen ist, wobei das Element eine Oberfläche (112) enthält, an der die Aufnahmevorrichtungen (140) von Sitzbefestigungen befestigt sind, **dadurch gekennzeichnet, dass** die Aufnahmevorrichtungen (140) einer Sitzbefestigung geeignet sind, um eine Entfernung des Sitzes, eine vollständige Befestigung des Sitzes in der Benutzungsstellung und eine teilweise Befestigung des Sitzes zu ermöglichen, die das Schwenken des Sitzes nach vorne erlaubt, wenn die Rückenlehne (121) des Sitzes gegen die Sitzfläche (122) des Sitzes umgelegt wird, und dass es eine Empfangsvorrichtung (150) einer Trägerstange (131) einer umklappbaren inneren Trennwand (13) enthält, die die Aufnahme der Trennwand-Trägerstange (131) ermöglicht, wobei die Empfangsvorrichtung (150) auf der Oberfläche (112) des Plattformelements (11) angeordnet ist.

2. Plattformelement (11) eines Kraftfahrzeug-Fahrgestells nach Anspruch 1, **dadurch gekennzeichnet, dass** die Aufnahmevorrichtungen (140) einer Sitzbefestigung mindestens eine Stange (141) enthalten, die an einem vorderen Teil (115) des Plattformelements (11) befestigt und dazu bestimmt ist, das Schwenken des Sitzes (12) um diesen zu ermöglichen.

3. Plattformelement (11) eines Kraftfahrzeug-Fahrgestells nach den Ansprüchen 1 oder 2, **dadurch gekennzeichnet, dass** die Empfangsvorrichtung (150) im Wesentlichen am Umfang der Oberfläche (112) angeordnet ist.

4. Plattformelement (11) eines Kraftfahrzeug-Fahrgestells nach einem der vorhergehenden Ansprüche, **dadurch gekennzeichnet, dass** es eine im Wesentlichen waagrechte und rechtwinklige Oberfläche (112) sowie mindestens zwei parallele Seitenflächen (117) im Wesentlichen senkrecht und lotrecht zur Oberfläche aufweist, wobei die Seitenflächen (117) lotrecht auf zwei Querträgern (118) unterer Enden aufliegen, wobei die Querträger dazu bestimmt sind, am Fahrgestell (4) des Fahrzeugs befestigt zu werden.

5. Plattformelement (11) eines Kraftfahrzeug-Fahrgestells nach einem der vorhergehenden Ansprüche, **dadurch gekennzeichnet, dass** es eine an der Oberfläche (112) hergestellte Öffnung (130) enthält, wobei die Öffnung dazu bestimmt ist, den Zugang zu einem Stauraum (111) zu ermöglichen, der im oberen Teil vom Plattformelement (11) begrenzt wird.

6. Plattformelement (11) eines Kraftfahrzeug-Fahrgestells nach einem der vorhergehenden Ansprüche, **dadurch gekennzeichnet, dass** der obere Teil (112) ein Bauteil ist, das ausgehend von einem Pressblechzuschnitt erhalten wird.

7. Fahrzeuggestell (4), das eine hintere Ladeplattform (21) und ein Plattformelement (11) nach einem der vorhergehenden Ansprüche enthält, das an der Vorderseite des Fahrgestells angeordnet ist, wobei das Plattformelement (11) einen durchgehenden Flächenbereich durchgehender Höhe gewährleistet, der zum Lagern von Gegenständen ausgehend von der hinteren Plattform (41) bis zur Vorderseite (115) des vorne angeordneten Plattformelements (11) geeignet ist.

8. Fahrzeuggestell (4), das eine hintere Ladeplattform und ein Plattformelement nach einem der Ansprüche 1 bis 6 enthält, wobei das Plattformelement eine Befestigungsfläche (119) in Kontakt mit der hinteren Plattform aufweist.

9. Fahrzeuggestell (4), das einen Stauraum enthält, der von einem Plattformelement (11) nach einem der Ansprüche 1 bis 6 verschlossen wird.

10. Fahrzeug, das ein Plattformelement (11) nach den Ansprüchen 1 bis 6 und/oder ein Fahrgestell (4) nach den Ansprüchen 7 bis 9 enthält.

## Claims

1. Motor vehicle chassis platform element (11) comprising devices (140) for receiving fastenings of an automobile seat, said element being intended to be fastened in the front part (41) of a vehicle chassis (4) in order to receive a front seat (12) provided with a cushion (122) and with a seatback (121), the element comprising an upper surface (112) to which there are fastened the devices (140) for receiving the seat fastenings, **characterized in that** the devices (140) for receiving the seat fastenings are adapted to allow an extraction of the seat, a complete fastening of the seat in the use position, and a partial fastening of the seat that allows the seat to be pivoted towards the front when the seatback (121) of the seat is folded over against the cushion (122) of the seat, and **in that** it comprises an accommodating device (150) for a support rod (131) of a foldable interior partition (13) that makes it possible to receive said partition support rod (131), the accommodating device (150) being placed on the upper surface (112) of the platform element (11).

2. Motor vehicle chassis platform element (11) according to Claim 1, **characterized in that** the devices (140) for receiving the seat fastenings comprise at least one rod (141) fastened to a front part (115) of the platform element (11) and intended to allow the seat (12) to pivot about said rod.

3. Motor vehicle chassis platform element (11) according to Claims 1 and 2, **characterized in that** the accommodating device (150) is arranged substantially at the periphery of the upper surface (112).

4. Motor vehicle chassis platform element (11) according to any one of the preceding claims, **characterized in that** it has a substantially horizontal and rectangular upper surface (112) and also at least two parallel lateral sides (117) which are substantially vertical and perpendicular to the upper surface, the lateral sides (117) resting perpendicularly on two lower end crosspieces (118), said crosspieces being intended to be fastened to the chassis (4) of the vehicle.

5. Motor vehicle chassis platform element (11) according to any one of the preceding claims, **characterized in that** it comprises an opening (130) made in the upper surface (112), the opening being intended to allow access to a stowage space (111) delimited in the upper part by the platform element (11).

6. Motor vehicle chassis platform element (11) according to any one of the preceding claims, **characterized in that** the upper part (112) is a piece obtained from a stamped sheet metal blank.

7. Vehicle chassis (4) comprising a rear loading platform (21) and a platform element (11) according to any one of the preceding claims arranged at the front of the chassis, said platform element (11) ensuring a continuous surface part of continuous height adapted for the storage of objects from the rear platform (41) to the front (115) of the platform element (11) arranged at the front.

8. Vehicle chassis (4) comprising a rear loading platform and a platform element according to any one of Claims 1 to 6, said platform element having a fastening surface (119) in contact with the rear platform.

9. Vehicle chassis (4) comprising a stowage space closed by a platform element (11) according to any one of Claims 1 to 6.

10. Vehicle comprising a platform element (11) according to Claims 1 to 6 and/or a chassis (4) according to Claims 7 to 9.
